(19) Europäisches Patentamt
European Patent Office
Office européen des brevets

(11) **EP 2 201 388 B1**

(12) **FASCICULE DE BREVET EUROPEEN**

(45) Date de publication et mention de la délivrance du brevet:
**16.03.2011 Bulletin 2011/11**

(21) Numéro de dépôt: **08805278.2**

(22) Date de dépôt: **15.10.2008**

(51) Int Cl.:
*G01P 5/26* *(2006.01)*        *G01S 17/58* *(2006.01)*

(86) Numéro de dépôt international:
**PCT/EP2008/063838**

(87) Numéro de publication internationale:
**WO 2009/050180 (23.04.2009 Gazette 2009/17)**

(54) **DISPOSITIF OPTIQUE DE MESURE DE PARAMÈTRES ANÉMONETRIQUES**

OPTISCHE ANORDNUNG ZUR MESSUNG VON WINDMESSERPARAMETERN

OPTICAL DEVICE FOR MEASURING ANEMOMETER PARAMETERS

(84) Etats contractants désignés:
**AT BE BG CH CY CZ DE DK EE ES FI GB GR HR HU IE IS IT LI LT LU LV MC MT NL NO PL PT RO SE SI SK TR**

(30) Priorité: **16.10.2007 FR 0707243**

(43) Date de publication de la demande:
**30.06.2010 Bulletin 2010/26**

(73) Titulaire: **THALES**
**92200 Neuilly-sur-Seine (FR)**

(72) Inventeurs:
• **LEHUREAU, Jean-Claude**
**F-91700 Sainte Genevieve Des Bois (FR)**
• **FENEYROU, Patrick**
**F-91430 Igny (FR)**
• **SCHLOTTERBECK, Jean-Pierre**
**F-26300 Rochefort-Samson (FR)**

(74) Mandataire: **Bréda, Jean-Marc et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
US-A- 3 834 816        US-A- 5 317 376
US-A1- 2004 027 570

• FORKEY J N ET AL: "ACCURACY LIMITS FOR PLANAR MEASUREMENTS OF FLOW FIELD VELOCITY, TEMPERATURE AND PRESSURE USING FILTERED RAYLEIGH SCATTERING" EXPERIMENTS IN FLUIDS, SPRINGER, HEIDELBERG, DE, vol. 24, no. 2, 1 février 1998 (1998-02-01), pages 151-162, XP000777622 ISSN: 0723-4864
• CHU BENJAMIN: "Laser light scattering" ANNUAL REVIEW OF PHYSICAL CHEMISTRY, octobre 1970 (1970-10), pages 145-174, XP002488621

**Description**

Le domaine de l'invention est celui des dispositifs optiques de mesure des paramètres anémométriques nécessaires au pilotage des aéronefs et plus particulièrement des avions de transport civils.

Un avion doit disposer des paramètres suivants pour les commandes de vol :

- La vitesse air indiquée dans deux ou trois directions ;
- La vitesse du son ou la température de l'air ;
- La pression statique.

La vitesse air indiquée est conventionnellement mesurée par l'écart de pression observé entre deux points précis d'un tube de Pitot permettant de maximiser l'effet de pression aérodynamique. Elle doit être mesurée avec une précision de l'ordre de 15 cm/s.

La vitesse du son est déduite d'une mesure de température dite « température totale » faite en un point de compression aérodynamique de l'atmosphère, généralement au nez de l'aéronef. Cette vitesse est importante dans le domaine des vitesses transsoniques. La précision de mesure est de l'ordre de 1 m/s correspondant à un écart de température de 2K.

La pression statique est mesurée en un point de la surface de l'aéronef qui est peu sensible aux écarts aérodynamiques. Sa précision de mesure vaut environ 20 Pa.

La vitesse air indiquée est une combinaison de la vitesse réelle et de la densité de l'air. Elle peut donc être mesurée à partir d'une donnée de vitesse air vraie et d'une mesure de la densité de l'atmosphère.

Actuellement, les sondes nécessaires à la mesure de ces paramètres sont des extrusions à la structure de la cabine. Elles présentent de nombreux inconvénients. Elles sont fragiles, sont sensibles au givre et nécessitent des moyens de dégivrage importants. Elles génèrent également de la traînée supplémentaire.

Il est possible de remplacer ces sondes par des vélocimètres laser qui présentent l'avantage de ne pas être intrusifs. Le principe de fonctionnement d'une sonde vélocimètrique est le suivant. On crée, à une certaine distance de la peau de l'avion, un réseau de franges d'interférences. Lorsqu'un aérosol atmosphérique traverse ce réseau, un signal modulé est renvoyé vers la sonde. La mesure des caractéristiques du signal permet de retrouver les informations de vitesse recherchée. Cette solution présente néanmoins certains inconvénients. Il n'est pas possible de mesurer la température par ce moyen. D'autre part, en l'absence d'aérosols, la mesure n'est plus possible.

Le dispositif suivant l'invention permet de mesurer la vitesse du son, donc la température et la vitesse air vraie de manière à suppléer ou à compléter l'information du vélocimètre laser en cas d'absence d'aérosols.

Plus précisément, l'invention a pour objet un dispositif optique destiné à la mesure de paramètres anémométriques d'un gaz en mouvement tels que sa vitesse et sa température, ledit gaz occupant une zone de mesure déterminée, le dispositif comprenant un module optique d'émission, un module optique de réception, des moyens optiques formant une voie référence et des moyens de calcul reliés au module de réception,

- le module optique d'émission comprenant un premier système optique émettant un premier faisceau de lumière à une première longueur d'onde dans la zone déterminée, ledit premier système optique ayant un premier axe optique,
- le module optique de réception comprenant un second système optique et au moins un premier photorécepteur, ledit second système optique :

  - ayant un second axe optique,
  - comprenant au moins des moyens de mélange optique d'une partie du premier faisceau d'émission issue de la voie référence et d'un second faisceau de lumière correspondant à une partie de la lumière du premier faisceau diffusée par la zone déterminée, ledit second faisceau étant émis à au moins une seconde longueur d'onde,
  - formant l'image des premier et second faisceaux mélangés sur ledit photorécepteur,

- les moyens de calcul étant agencés de façon à déterminer au moins la différence de longueur d'onde ou de fréquence entre la première longueur d'onde et la seconde longueur d'onde,

caractérisé en ce que l'angle que font entre eux le premier et le second axe optique est différent de zéro et est de l'ordre de quelques degrés.

Avantageusement, les moyens optiques de la voie référence comportent une fibre optique et des éléments optiques agencés de façon à injecter dans ladite fibre une partie du premier faisceau de lumière.

Avantageusement, le second système optique comprend au moins des moyens de mélange optique d'une partie du premier faisceau d'émission issue de la voie référence et d'un troisième faisceau de lumière correspondant à une partie de la lumière du premier faisceau diffusée par la zone déterminée, ledit troisième faisceau étant émis à au moins une seconde longueur d'onde.

Avantageusement, le module optique de réception comprend un second photorécepteur, ledit second système optique formant l'image des premier et troisième faisceaux mélangés sur ledit second photorécepteur.

Avantageusement, une lame optique de phase est disposée sur le trajet du troisième faisceau en amont des moyens de mélange optique.

Avantageusement, les moyens de mélange optique sont une lame à faces planes et parallèles inclinée sur les axes optiques d'au moins le premier faisceau de lumière et d'au moins le second faisceau de lumière, le premier faisceau de lumière étant transmis par ladite lame après deux réflexions successives, le second faisceau de lumière étant directement transmis par ladite lame. Ils peuvent être également un réseau de diffraction, au moins un des faisceaux étant diffractés par ledit réseau ou peuvent être un prisme de Nomarsky.

Avantageusement, les moyens de mélange optique comportent une lame de phase agencé de façon à dévier les premier, second et troisième faisceaux dans trois directions différentes créant ainsi trois triplets de trois faisceaux, chaque triplet de faisceaux déviés ayant un écart de phase par rapport aux deux autres. La lame de phase peut comporter une structure périodique comprenant des éléments identiques, chaque élément comportant au moins trois facettes planes inclinées.

Avantageusement, les moyens de calcul comprennent des moyens de calcul de transformée de Fourier des signaux issus des photorécepteurs, des moyens d'analyse des dites transformées de Fourier de façon à déterminer le ou les pics de fréquence, les paramètres anémométriques étant déterminés à partir de l'analyse de la position desdits pics. De plus, lorsque, le module optique de réception comporte deux récepteurs, les moyens de calcul effectuent la transformée de Fourier d'un pseudo-signal complexe dont la partie réelle est le premier signal issu du premier photo-récepteur et la partie imaginaire le second signal issu du second photo-récepteur.

L'invention concerne également le porteur du dispositif précédent, dans ce cas, la zone de mesure étant située au voisinage et en dehors de la couche limite de l'aéronef.

Avantageusement, le dispositif est de type pariétal, c'est-à-dire que l'ensemble des éléments du dispositif est disposé à l'intérieur de l'appareil, seul le premier faisceau de lumière étant émis vers l'extérieur de l'aéronef. Il peut comporter un élément optique réfléchissant disposé sur la peau de l'aéronef et agencé de façon à réfléchir à une partie de la lumière du premier faisceau diffusée par la zone déterminée sur l'axe optique du second système optique formant ainsi le second faisceau. Il peut également comporter un élément mécanique agencé de façon à créer des perturbations acoustiques au voisinage de la zone de mesure.

L'invention sera mieux comprise et d'autres avantages apparaîtront à la lecture de la description qui va suivre donnée à titre non limitatif et grâce aux figures annexées parmi lesquelles :

La figure 1 représente le principe de la diffusion Rayleigh ;
La figure 2 représente le principe de la diffusion de Brillouin-Mandel'shtam ;
La figure 3 représente la diffusion spectrale de la lumière dans le cas du modèle de diffusion de Rayleigh ;
La figure 4 représente la diffusion spectrale de la lumière dans le cas de du modèle de diffusion de Brillouin-Mandel'shtam ;
La figure 5 représente un premier schéma de réalisation du dispositif optique selon l'invention ;
La figure 6 représente un second schéma de réalisation du dispositif optique selon l'invention ;
La figure 7 représente deux vues de la transformée de Fourier du signal issu du photorécepteur ;
La figure 8 représente un premier mode de réalisation du module optique de réception ;
La figure 9 représente un premier mode de réalisation des moyens de mélange optique ;
La figure 10 représente un second mode de réalisation des moyens de mélange optique ;
La figure 11 représente un troisième mode de réalisation des moyens de mélange optique ;
La figure 12 représente une vue partielle de la figure 11 ;
Les figures 13 et 14 représentent un quatrième mode de réalisation des moyens de mélange optique ;
La figure 15 représente une vue générale de l'implantation du dispositif sur aéronef ;
Les figures 16 à 19 représentent diverses variantes d'implantation possible du dispositif sur aéronef.

Les vélocimètres laser fonctionnent généralement sur les aérosols. Cette solution est aujourd'hui la seule solution non intrusive offrant la précision de vitesse désirée. Il n'existe, par contre, pas de solution non intrusive commercialisée pour la mesure de température. Les dispositifs optiques selon l'invention permettent de mesurer la vitesse du son et donc la température et la vitesse air vraie de manière à remplacer ou à compléter l'information d'un vélocimètre laser en cas d'absence d'aérosols.

Le principe physique de la mesure de température de l'air peut être déduite de la diffusion Rayleigh moléculaire. En utilisant ce mécanisme, la distribution spectrale d'une lumière diffusée est liée au mouvement moléculaire dans le gaz.

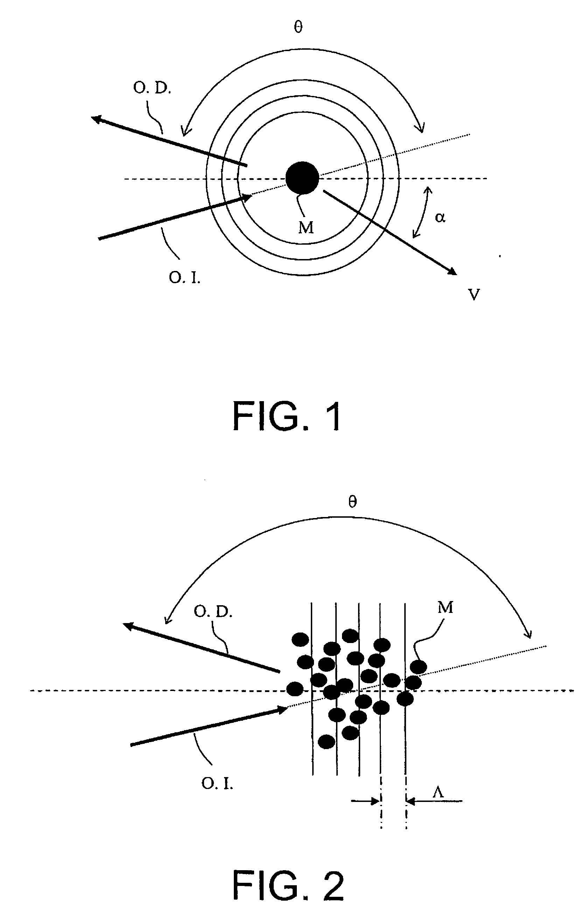

Dans un modèle simplifié de diffusion Rayleigh moléculaire, chaque molécule est la source d'une onde sphérique comme indiqué sur la figure 1 dont le décalage Doppler dépend de la direction de collection et de la vitesse des molécules M. On a alors:

$$\text{Equation 1} \quad \lambda_s = \lambda \frac{1 - v\cos(\alpha)\sin\left(\frac{\theta}{2}\right)/c}{1 + v\cos(\alpha)\sin\left(\frac{\theta}{2}\right)/c} \approx \frac{\lambda}{1 + 2\frac{v\cos(\alpha)\sin\left(\frac{\theta}{2}\right)}{c}}$$

où

$\lambda$ est la longueur d'onde de l'onde incidente O.I. ;

$\lambda_s$ est la longueur d'onde de l'onde diffusée O.D. par les molécules ;

c est la vitesse de la lumière et V la vitesse des molécules ;

$\theta$ est l'angle entre les vecteurs d'onde de l'onde incidente et de l'onde diffusée, les vecteurs d'onde étant définis dans le même repère ;

$\alpha$ est l'angle entre le vecteur vitesse V et le vecteur d'onde de l'onde incidente.

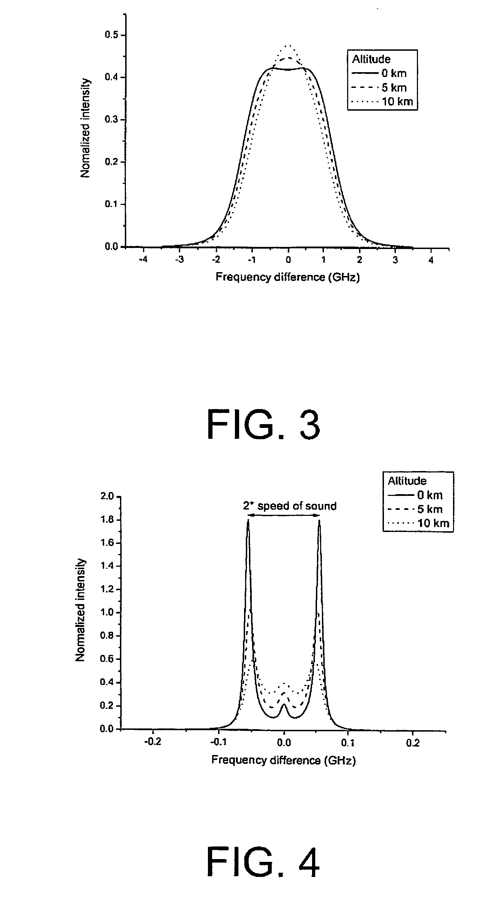

La distribution gaussienne des vitesses moléculaires induit un élargissement gaussien de la distribution spectrale de la diffusion comme indiqué sur la figure 3 qui représente la répartition d'intensité de la lumière diffusée par une onde purement monochromatique en fonction de la variation de fréquence optique autour de la fréquence de l'onde incidente. Sur la figure 3, la répartition d'intensité est donnée pour trois concentrations moléculaires d'azote données correspondant à trois altitudes différentes (au sol, à 5 kms et à 10 kms d'altitude), pour une longueur d'onde incidente de 355 nm et pour un angle de collection de $\pi$ rad.

Dans une modèle plus précis illustré en figure 2, la diffraction de l'onde incidente vers le système de collection est liée aux fluctuations de densité moléculaire le long d'un réseau volumique présentant la bonne direction et de période spatiale $\Lambda$. On a la relation :

$$\Lambda = \frac{\lambda}{2.\sin\left(\frac{\theta}{2}\right)}$$

avec les mêmes notations que précédemment.

Dans un modèle sans collision entre les molécule, le temps de reconfiguration de ce réseau est lié à $\Lambda$ et à la vitesse de chaque molécule. Il induit un élargissement gaussien de l'onde diffusée qui est similaire à l'élargissement décrit dans le cadre du modèle simplifié précédent. De manière à introduire la contribution des collisions moléculaires, le pas du réseau doit être comparé au libre parcours moyen moléculaire pour décrire la distribution spectrale de la diffusion moléculaire. En physique et dans la théorie cinétique des gaz, le libre parcours moyen d'une particule est la distance moyenne que parcourt une particule entre deux collisions. Le rapport entre $\Lambda$ et le libre parcours moyen $l_m$ est noté y dans la suite.

Si le libre parcours moyen des molécules est supérieur au pas des interférences, soit y<1, la distribution spectrale est déterminée par le mouvement brownien des molécules. Cette situation appelée régime cinétique est généralement rencontrée lorsque la densité moléculaire est faible ou lorsque la lumière rétro-diffusée est collectée pour une longueur d'onde faible, par exemple dans le cas où la longueur d'onde $\lambda$ est située dans le domaine des U.V. Le spectre de la rétro-diffusion moléculaire est élargi thermiquement, ce qui conduit à une distribution gaussienne dont la largeur est proportionnelle à la racine carrée de la température.

Inversement, si le libre parcours moyen est comparable ou inférieur au pas des interférences, soit y>1, l'évolution de la densité moléculaire le long du réseau volumique est dictée par l'équation de diffusion et peut être plus lente que la vitesse des molécules. Ce ralentissement conduit à un affinement du spectre diffracté. Ce régime est appelé régime hydrodynamique. Le spectre présente alors trois raies comme illustré en figure 4 qui représente la répartition d'intensité de la lumière diffusée par une onde purement monochromatique en fonction de la variation de fréquence optique autour de la fréquence de l'onde incidente. Sur la figure 4, la répartition d'intensité est donnée pour trois concentrations moléculaires d'azote données correspondant à trois altitudes différentes (au sol, à 5 kms et à 10 kms d'altitude), pour une longueur d'onde incidente de 1550 nm et pour un angle de collection de 500 mrad. La raie centrale correspond à la diffusion moléculaire et les deux raies de part et d'autre, appelées diffusion de Brillouin-Mandel'shtam sont liées à l'activation thermique des ondes acoustiques. Le décalage spectral entre la raie centrale et les deux raies acoustiques permet, en connaissant le pas du réseau $\Lambda$, de mesurer la vitesse du son $v_s$ et, donc la température.

Dans le cas d'un aéronef en vol, il est clair que le libre parcours moyen ne peut être connu précisément à chaque instant. Cependant, il est possible, connaissant l'altitude maximale de la l'aéronef, de connaître approximativement sa valeur maximale. Dans ce cas, pour que la condition y>1 soit toujours vérifiée, il suffit que la période spatiale $\Lambda$ soit nettement supérieure à cette valeur maximale du libre parcours moyen.

Quelque soit le régime de fonctionnement, régime hydrodynamique ou régime cinétique, la fréquence centrale de la diffusion Rayleigh subit un décalage dû à la vitesse de l'avion par rapport à l'air. La mesure de la vitesse air est donc possible en utilisant une référence de fréquence. On peut, par exemple, utiliser un mélange de l'onde diffusée avec un oscillateur local dans un schéma de détection cohérente ou un calibrage d'un interféromètre dans un schéma de détection incohérente. Une telle mesure de vitesse peut être utilisée en support d'un anémomètre basé sur la rétro-diffusion par les aérosols en cas de concentration insuffisante de ceux-ci.

Comme présenté sur la figure 4, la diffusion Brillouin-Mandel'shtam est d'autant plus étroite spectralement que le paramètre y est grand. La valeur de y étant proportionnelle à la longueur d'onde $\Lambda$ du réseau diffractant, il est préférable d'utiliser une onde incidente infra-rouge et/ou un petit angle de collection. De plus, le décalage des raies acoustiques $\Delta f$ égal au rapport $v_s/\Lambda$ est lui aussi d'autant plus faible que $\Lambda$ est grand.

Dans le cas d'une architecture optique mono-statique, c'est-à-dire une architecture fonctionnant en rétro-diffusion, l'angle $\theta$ vaut $\pi$ et la valeur de $\Lambda$ est strictement égale à la demi longueur d'onde de l'onde incidente. Dans ce cas, il est nécessaire d'utiliser une grande longueur d'onde de manière à accroître le paramètre y. Toutefois, la puissance diffusée décroît rapidement lorsque la longueur d'onde croît. Or, cette puissance est faible et il est intéressant de l'optimiser.

Aussi, le dispositif optique selon l'invention comporte une géométrie bi-statique dans laquelle l'angle $\theta$ est faible permettant donc de maximiser la finesse des raies acoustiques, ce qui facilite la détection dans une architecture cohérente tout en laissant le choix d'une longueur d'onde courte pour augmenter la puissance diffusée.

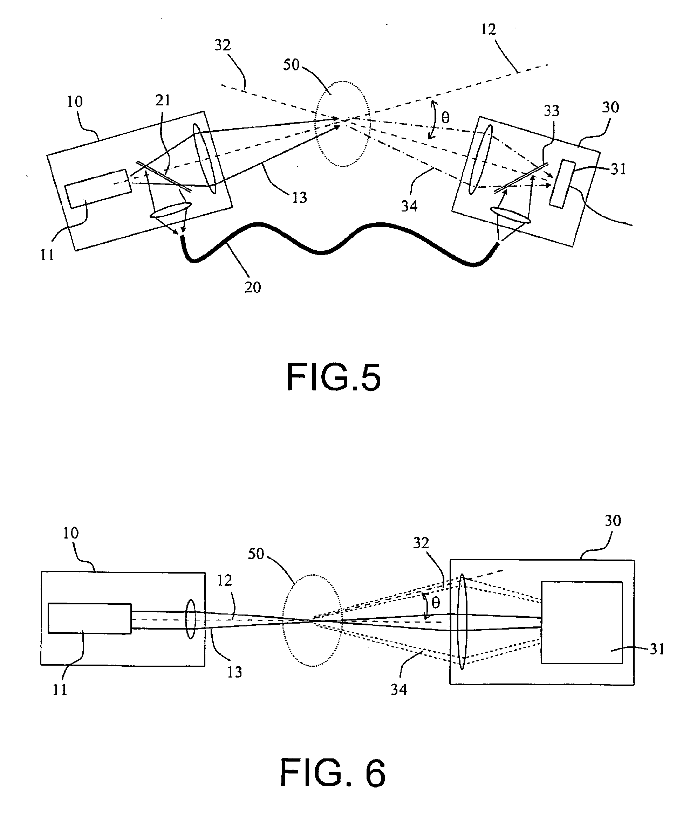

Plus précisément, et à titre de premier exemple, la figure 5 représente un premier schéma de réalisation du dispositif optique selon l'invention. Sur cette figure et sur les suivantes, les moyens de calcul ne sont pas représentés. La partie opto-électronique du dispositif comporte :

- un module optique d'émission 10 comprenant un premier système optique comportant une source de lumière cohérente 11 émettant un premier faisceau de lumière 13 à une première longueur d'onde dans une zone de mesure 50 déterminée représentée par un ovale en pointillés sur la figure 5, ledit premier système optique ayant un premier axe optique 12,
- des moyens optiques formant une voie référence 20. Dans le cas de la figure 4, la voie référence est constituée d'une fibre optique et de lames optiques séparatrices 21 agencées de façon à injecter dans ladite fibre une partie du premier faisceau de lumière ;
- un module optique de réception 30 comprenant un second système optique et au moins un premier photorécepteur 31, ledit second système optique :

  - ayant un second axe optique 32,
  - comprenant au moins des moyens de mélange optique 33 d'une partie du premier faisceau d'émission 13 issue de la fibre optique et d'un second faisceau de lumière 34 correspondant à une partie de la lumière du premier faisceau diffusée par la zone de mesure, ledit second faisceau étant émis à au moins une seconde longueur d'onde,
  - formant l'image des premier et second faisceaux mélangés sur le premier photorécepteur 31.
  - l'angle $\theta$ que font entre eux le premier et le second axe optique est de l'ordre de quelques degrés.

Dans une variante du dispositif de la figure 5 représentée en figure 6, le faisceau de référence n'est pas conduit vers le détecteur par une voie auxiliaire fibrée ou non mais c'est la partie non diffractée du premier faisceau qui forme la voie référence pour détecter de manière cohérente les ordres diffractés collectés par le module optique de réception. Cette solution a pour avantage d'éliminer les signaux parasites introduits par les fluctuations de l'une ou l'autre des voies.

Comme il a été dit, le faisceau diffusé a au moins une longueur d'onde $\lambda_s$ différente de la longueur d'onde $\lambda$ du faisceau initial. Comme on peut le voir dans l'équation 1, l'écart de longueur d'onde est proportionnel au rapport v/c, v représentant la vitesse des molécules qui est de l'ordre de quelques centaines de mètre/seconde et c représentant la vitesse de la lumière qui vaut $3.10^8$ mètre/seconde. Par conséquent, cet écart est très faible. L'analyse du spectre de l'onde diffusée pourrait se faire par des moyens conventionnels tel que des réseaux diffractants, des interféromètres de Michelson ou de Fabry-Perot. Toutefois, la finesse d'analyse demandée est incompatible d'un système à faible coût.

Aussi, il est préférable de mélanger le faisceau diffusé avec une partie du premier faisceau. En effet, dans ce cas, on peut démontrer que la combinaison des deux faisceaux est modulée à une fréquence égale à la différence des fréquences des deux faisceaux optiques. Compte-tenu que la longueur d'onde du faisceau initial est une longueur d'onde optique avec une fréquence de l'ordre de quelques centaines de téraHertz et que l'écart de longueur d'onde ou de fréquence est de l'ordre de $10^{-6}$, la fréquence de modulation vaut quelques centaines de mégaHertz et est parfaitement mesurable avec une grande précision. Il est donc essentiel que le dispositif comporte une voie référence.

La façon la plus simple pour mesurer cette fréquence de modulation est de réaliser une transformée de Fourier du signal modulé par le mélange des deux faisceaux et envoyé sur un photorécepteur.

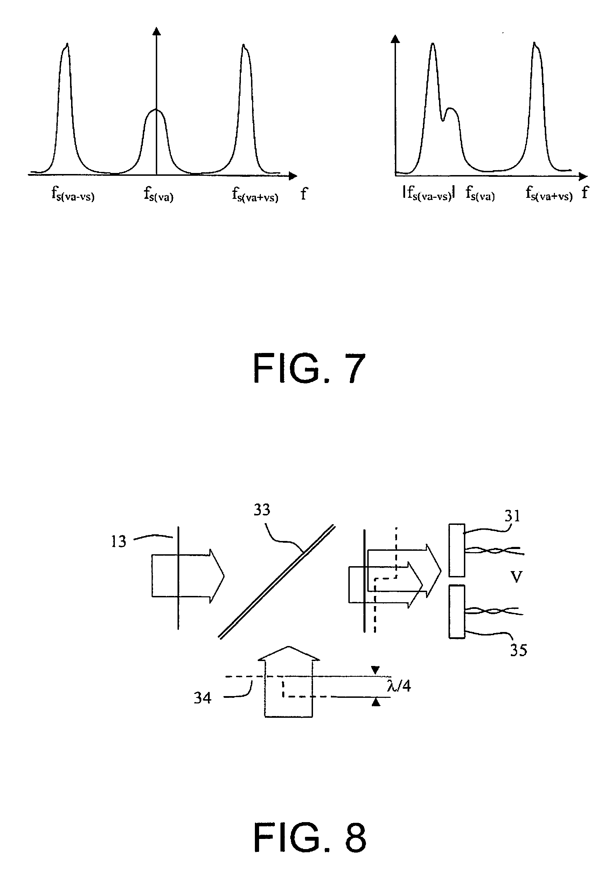

De façon plus précise et comme illustrée en figure 7, le spectre modulé comporte trois fréquences de modulation correspondant au spectre de la lumière diffusée, une fréquence centrale $f_{s(va)}$ correspondant à la diffusion de la lumière par un faisceau balayant l'air extérieur à la vitesse $v_a$ de l'aéronef et deux fréquences latérales $f_{s(va-vs)}$ et $f_{s(va+vs)}$ correspondant à la diffusion de la lumière par le mouvement d'agitation moléculaire à la vitesse $v_s$. Ces trois fréquences sont respectivement proportionnelle aux vitesses $v_a$, $v_a-v_s$ et $v_a+v_s$. Lorsqu'on réalise le mélange du faisceau diffusé avec le faisceau de référence, dans le cas général, la vitesse $v_a$ de l'aéronef est inférieure à la vitesse moyenne $v_s$ de l'agitation moléculaire. Par conséquent, le spectre des fréquences subit un repliement autour de la fréquence centrale comme indiqué sur la figure 8.

L'analyse de ce spectre replié reste possible. On peut cependant utiliser diverses solutions pour éviter le repliement du spectre.

Une première solution consiste à décaler artificiellement la fréquence centrale en introduisant sur la voie référence un dispositif permettant de décaler légèrement la longueur d'onde du faisceau de référence. Ce décalage peut être réalisé en utilisant une cellule acousto-optique.

En l'absence de décalage acousto-optique, il est aussi possible de détecter le spectre sans repliement en ayant pris soin de faire une détection synchrone en phase et en quadrature comme représentée en figure 8. On utilise alors deux détecteurs 31 et 35. Le premier détecteur 31 reçoit une première partie du faisceau de référence 13 et une première partie du faisceau diffusé 34. Le second détecteur reçoit une seconde partie du faisceau de référence 13 et une seconde partie du faisceau diffusé 34 déphasé d'un quart de longueur d'onde par rapport à la première partie du faisceau diffusé.

Une méthode préférentielle de détection est de numériser les signaux issus de chacun des détecteurs 31 et 35 et de considérer l'une des voies comme la composante réelle et l'autre comme la composante imaginaire d'un signal complexe dont on calcule la transformée de Fourier afin de retrouver les raies spectrales.

La recombinaison des ordres diffractés avec le faisceau référence peut se faire de différentes façons.

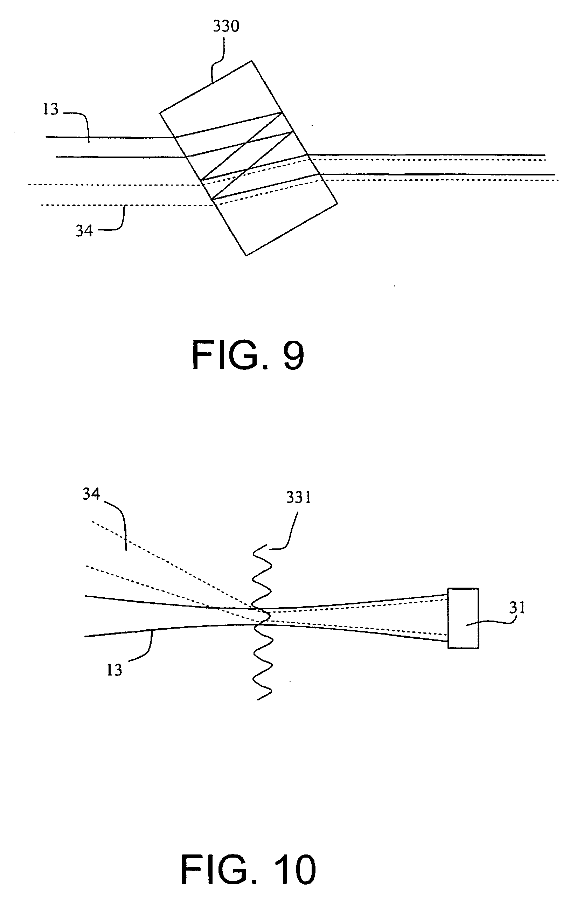

La figure 9 représente un premier mélangeur possible 330. Il s'agit d'une lame de verre à faces planes et parallèles, inclinée sur les axes optiques d'au moins le premier faisceau de lumière 13 et d'au moins le second faisceau de lumière 34, le premier faisceau de lumière étant transmis par ladite lame après deux réflexions successives, le second faisceau de lumière étant directement transmis par ladite lame. L'épaisseur et l'inclinaison de la lame étant tels que les deux faisceaux se mélangent à la sortie de la lame 330. Ce mélangeur simple permet également d'atténuer fortement la voie référence en lui faisant subir deux réflexions successives, chaque réflexion ne réfléchissant pas plus de quelques pour cent du faisceau incident. En effet, les faisceaux diffusés sont nécessairement de faible intensité par rapport à l'intensité du faisceau référence. Il est donc intéressant de façon à équilibrer l'énergie des faisceaux d'atténuer la voie référence.

La figure 10 représente un second mélangeur possible 331. Il s'agit d'un réseau placé au point image du second système optique. La détection peut alors se faire sur les ordres diffractés par ce réseau. Les paramètres du réseau sont tels que le faisceau de référence directement transmis par le réseau et le faisceau diffusé diffracté par le réseau se combinent à la sortie du réseau.

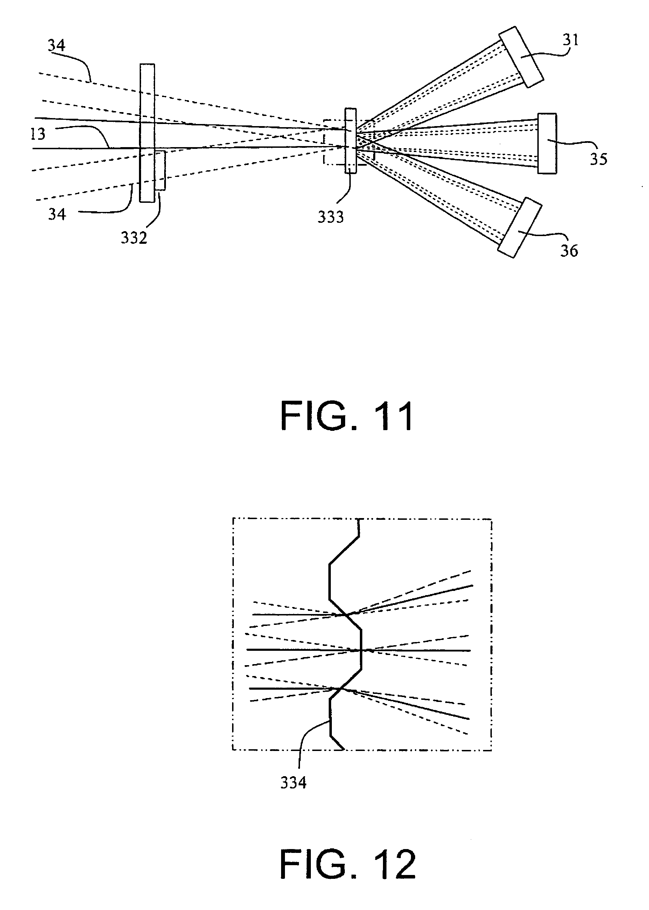

La figure 11 représente un troisième mélangeur possible assurant le mélange du faisceau référence 13 et de deux faisceaux diffusés 34. Une première lame optique de phase 332 est disposée sur le trajet du troisième faisceau diffusé en amont des moyens de mélange optique. Cette lame a pour objet de déphaser l'un des faisceaux 34 d'une demi-longueur d'onde et est préférentiellement réalisée par dépôt d'une couche mince sur une partie d'un support à faces parallèles que traverse les trois faisceaux. Ce dispositif analogue au dispositif de contraste de phase imaginé par Zernicke permet de convertir les modulations de phase issues de la zone en modulation d'intensité. Les moyens de mélange optique comportent une seconde lame de phase 333 agencée de façon à dévier le premier faisceau de référence et le second et le troisième faisceaux diffusés dans trois directions différentes créant ainsi trois triplets de trois faisceaux, chaque triplet de faisceaux déviés représente l'éclairement reçu sur des bandes de période 'p' et de largeur sensiblement égal à 'p/3' et ayant un écart de phase de 120° par rapport aux deux autres. Dans ce cas, comme représentée sur la figure 12, la lame de phase 333 comporte une structure périodique comprenant des éléments identiques 334, chaque élément comportant au moins trois facettes planes inclinées dans trois directions différentes. Chacun des triplets de faisceaux est envoyé sur un photo-récepteur 31, 35 et 36. Les signaux issus de ces trois détecteurs sont traités numériquement de manière à identifier le défilement de franges dans chacune des sens. La somme des vitesses de défilement

EP 2 201 388 B1

fournit l'information de vitesse du son tandis que la différence fournit l'information de vitesse de l'air.

L'opération numérique menant à ce résultat peut être du type :

- création de deux suites temporelles S+ et S- à partir des *signaux issus des détecteurs 31, 35 et 36 :

$$S_+ = s_{31} + s_{35}e^{2i\pi/3} + s_{36}e^{4i\pi/3}$$
$$S_- = s_{31} + s_{35}e^{-2i\pi/3} + s_{36}e^{-4i\pi/3}$$

- transformation de Fourier de ces signaux
- Identification des maxima F+ et F- correspondants aux fréquences temporelles des franges montantes et descendantes de pas 'p' se projetant sur la lame de phase 333.

L'objet des sommations suivant trois phases croissantes et décroissantes est de séparer la mesure des composantes acoustiques se propageant dans et contre le sens de défilement de l'air au point de mesure. La connaissance de la somme des deux fréquences F+ et F- permet donc d'identifier la vitesse du son dans l'air tandis que leur différence permet d'identifier la vitesse de l'écoulement de l'air.

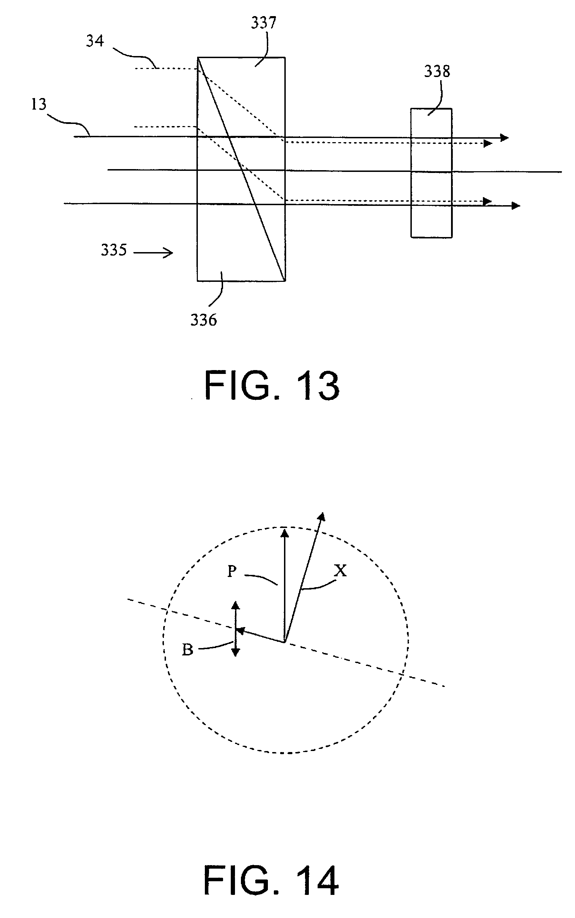

La figure 13 représente un troisième mélangeur 335 possible comportant un interféromètre du type interféromètre de Nomarsky. Dans ce type d'interféromètre, un élément biréfringent tel qu'une lame ou un prisme cristallin est introduit sur le faisceau de manière à créer une déflection ou un décalage équivalent à celui apporté par le réseau acoustique recherché. Dans le cas de la figure 13, l'interféromètre de Nomarsky 335 comprend deux prismes 336 et 337 montés tête-bêche de façon à former une lame à faces planes et parallèles. Dans cette configuration, un faisceau de lumière polarisé ressort de l'interféromètre de Nomarski parallèlement à lui-même mais ayant subi un décalage dépendant de sa polarisation et des caractéristique des prismes. L'axe de polarisation de cet élément biréfringent est orienté suivant un angle faible de la polarisation incidente P de manière à ce que une faible partie de l'onde non diffractée soit déviée dans la direction de l'ordre diffracté. L'ordre diffracté étant orthogonal à la composante défléchie de l'ordre zéro, un battement peut être observé sur un analyseur 338 placé à 45° de l'axe du prisme X. De manière préférentielle on fera cette analyse par soustraction des battements B observés a +45° et -45° des axes de l'analyseur comme représenté en figure 14. Cet interféromètre permet la mesure même en présence d'aberrations sur le faisceau incident ou collecté.

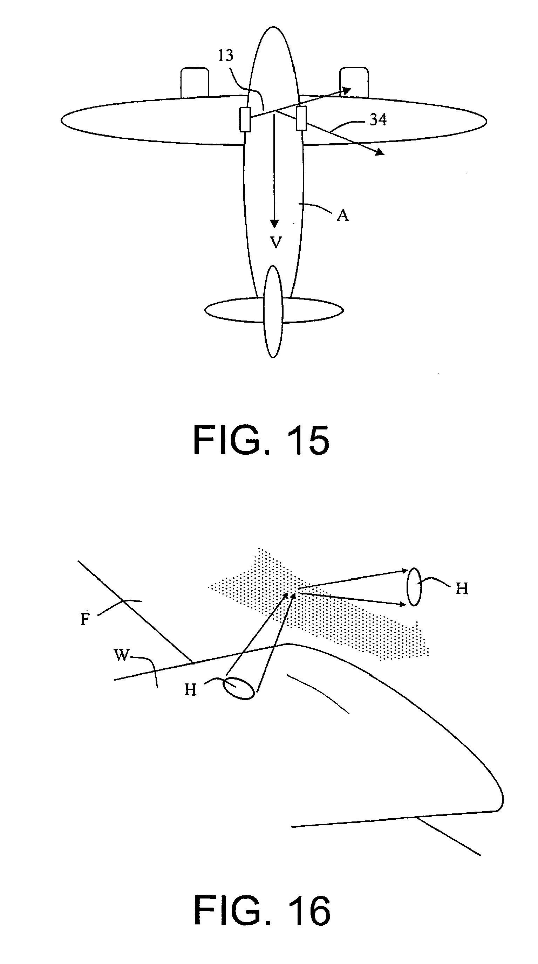

La figure 15 représente le principe général d'implantation du dispositif sur un aéronef A. La mesure de vitesse doit se faire suivant l'axe perpendiculaire au franges d'interférence associées aux directions du faisceau incident 13 et du faisceau détecté 34. Pour faire une mesure de vitesse, on place ces directions suivant un axe quasiment perpendiculaire au vecteur déplacement V.

Il existe différentes configurations permettant de disposer le dispositif selon l'invention sur l'aéronef A. Les implantations retenues dépendent des contraintes liées aux paramètres aérodynamiques, des contraintes d'encombrement et plus généralement des contraintes d'installation sur aéronef.

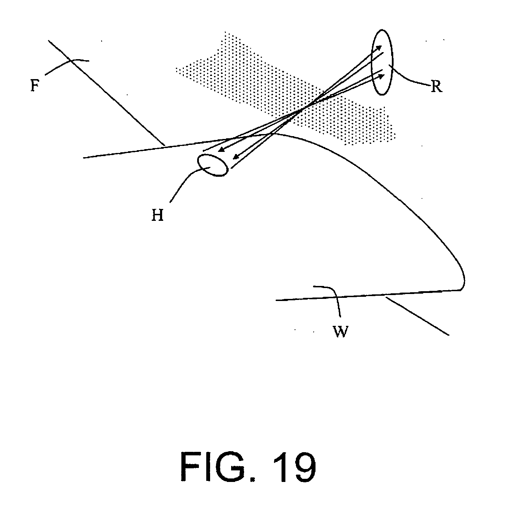

Les différentes implantations possibles sur aéronef sont représentées sur les figures 16 à 19. Ces figures représentent une portion du fuselage F et de l'aile W d'un aéonef. Sur ces figures, seuls les hublots de sortie H des systèmes optiques d'émission et de réception ont été représentés par des ellipses par souci de clarté. Bien entendu, les modules optiques sont interchangeables : le module d'émission pouvant occuper l'emplacement du module de réception. Les deux modules optiques d'émission et de réception peuvent être :

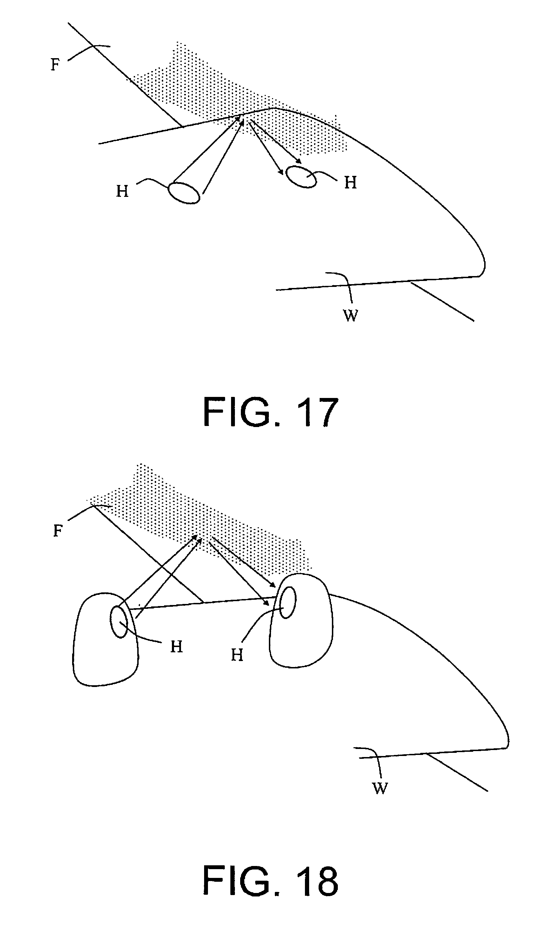

- confondus dans une même base ; On parle d'architecture monostatique ;
- intégrés sous formes d'insert faisant partie du profil aérodynamique comme indiqué sur la figure 16 ;
- disposés approximativement face à face dans des modules sortant de la peau de l'avion comme indiqué sur la figure 17 ;
- disposés dans le même plan, par exemple sur un intrados d'aile comme indiqué sur la figure 18.
- disposés face à un élément réflecteur R comme indiqué sur la figure 18: Cet élément peut être une structure réfléchissante : miroir, hologramme ou catadioptre.

Les moyens de calcul peuvent être installés soit en pied de sonde soit déportés dans des calculateurs centraux.

On peut également placer un élément turbulateur au voisinage de la zone à analyser. Les turbulences créées se dissipe en partie sous forme d'ondes acoustiques dont certaines se trouve dans la bande de capture du senseur optique. La vitesse de propagation de ces ondes permet de déterminer la vitesse du son et la vitesse de l'écoulement.

**Revendications**

1. Dispositif optique pour aéronef destiné à la mesure de paramètres anémométriques d'un gaz en mouvement tels que sa vitesse et sa température, ledit gaz occupant une zone de mesure (50) déterminée, le dispositif comprenant un module optique d'émission (10), un module optique de réception (30), des moyens optiques (20) formant une voie référence et des moyens de calcul reliés au module de réception,

   • le module optique d'émission (10) comprenant un premier système optique émettant un premier faisceau de lumière (13) à une première longueur d'onde dans la zone déterminée, ledit premier système optique ayant un premier axe optique (12),
   • le module optique de réception (30) comprenant un second système optique et au moins un premier photorécepteur (31), ledit second système optique :

   • ayant un second axe optique (32),
   • comprenant au moins des moyens de mélange optique (33) d'une partie du premier faisceau d'émission issue de la voie référence et d'un second faisceau de lumière (34) correspondant à une partie de la lumière du premier faisceau diffusée par la zone déterminée, ledit second faisceau étant émis à au moins une seconde longueur d'onde,
   • formant l'image des premier et second faisceaux mélangés sur ledit photorécepteur (31),

   • les moyens de calcul étant agencés de façon à déterminer au moins la différence de longueur d'onde ou de fréquence entre la première longueur d'onde et la seconde longueur d'onde,

   **caractérisé en ce que** l'angle que font entre eux le premier et le second axe optique (12, 32) est différent de zéro et est de l'ordre de quelques degrés.

2. Dispositif optique selon la revendication 1, **caractérisé en ce que** les moyens optiques de la voie référence comportent une fibre optique (20) et des éléments optiques (21) agencés de façon à injecter dans ladite fibre une partie du premier faisceau de lumière.

3. Dispositif optique selon l'une des revendications 1 ou 2, **caractérisé en ce que** les moyens optiques de la voie référence comportent un dispositif, du type cellule acousto-optique, permettant de décaler légèrement la longueur d'onde du faisceau de référence.

4. Dispositif optique selon l'une des revendications précédentes, **caractérisé en ce que** le second système optique comprend au moins des moyens de mélange optique (33) d'une partie du premier faisceau d'émission issue de la voie référence et d'un troisième faisceau de lumière correspondant à une partie de la lumière du premier faisceau diffusée par la zone déterminée, ledit troisième faisceau étant émis à au moins une seconde longueur d'onde, ledit troisième faisceau correspondant à une seconde partie du faisceau diffusé.

5. Dispositif optique selon la revendication 5, **caractérisé en ce que** le module optique de réception comprend un second photorécepteur (35), ledit second système optique formant l'image des premier et troisième faisceaux mélangés sur ledit second photorécepteur.

6. Dispositif optique selon l'une des revendications 5 ou 6, **caractérisé en ce que** une lame optique de phase (332) est disposée sur le trajet du troisième faisceau en amont des moyens de mélange optique.

7. Dispositif optique selon l'une des revendications précédentes, **caractérisé en ce que** les moyens de mélange optique sont une lame (330) à faces planes et parallèles inclinée sur les axes optiques d'au moins le premier faisceau de lumière et d'au moins le second faisceau de lumière, le premier faisceau de lumière étant transmis par ladite lame après deux réflexions successives, le second faisceau de lumière étant directement transmis par ladite lame.

8. Dispositif optique selon l'une des revendications 1 à 7, **caractérisé en ce que** les moyens de mélange optique sont un réseau de diffraction (331), au moins un des faisceaux étant diffractés par ledit réseau.

9. Dispositif optique selon l'une des revendications 1 à 7, **caractérisé en ce que** les moyens de mélange optique comportent un prisme de Nomarsky (335).

10. Dispositif optique selon l'une des revendications 4 à 7, **caractérisé en ce que** les moyens de mélange optique comportent une lame de phase (333) agencée de façon à dévier les premier, second et troisième faisceaux dans trois directions différentes créant ainsi trois triplets de trois faisceaux, chaque triplet de faisceaux déviés ayant un écart de phase par rapport aux deux autres.

11. Dispositif optique selon la revendication 10, **caractérisé en ce que** la lame de phase comporte une structure périodique (334) comprenant des éléments identiques, chaque élément comportant au moins trois facettes planes inclinées.

12. Dispositif optique selon l'une des revendications précédentes, **caractérisé en ce que** les moyens de calcul comprennent des moyens de calcul de transformée de Fourier des signaux issus des photorécepteurs, des moyens d'analyse des dites transformées de Fourier de façon à déterminer le ou les pics de fréquence, les paramètres anémométriques étant déterminés à partir de l'analyse de la position desdits pics.

13. Dispositif optique selon la revendication 12, **caractérisé en ce que**, le module optique de réception comportant deux récepteurs, les moyens de calcul effectuent la transformée de Fourier d'un pseudo-signal complexe dont la partie réelle est le premier signal issu du premier photo-récepteur et la partie imaginaire le second signal issu du second photo-récepteur.

14. Aéronef **caractérisé en ce qu'**il comporte au moins un dispositif optique destiné à la mesure de paramètres anémométriques selon l'une des revendications précédentes, la zone de mesure étant située au voisinage et en dehors de la couche limite de l'aéronef.

15. Aéronef selon la revendication 14, **caractérisé en ce que** le dispositif est de type pariétal, c'est-à-dire que l'ensemble des éléments du dispositif est disposé à l'intérieur de l'appareil, seul le premier faisceau de lumière étant émis vers l'extérieur de l'aéronef.

16. Aéronef selon la revendication 15, **caractérisé en ce** le dispositif comporte de plus un élément optique réfléchissant (R) disposé sur la peau de l'aéronef et agencé de façon à réfléchir à une partie de la lumière du premier faisceau diffusée par la zone déterminée sur l'axe optique du second système optique formant ainsi le second faisceau.

17. Aéronef selon l'une des revendications 14 à 16, **caractérisé en ce que** l'aéronef comporte un élément mécanique agencé de façon à créer des turbulences acoustiques au voisinage de la zone de mesure.

**Claims**

1. An optical device for aircraft designed to measure the anemometric parameters of a moving gas, such as its speed and its temperature, said gas occupying a predetermined measuring zone (50), the device including an optical emitting module (10), an optical receiving module (30), optical means (20) forming a reference channel and calculation means connected to the receiving module,

   • the optical emitting module (10) comprising a first optical system emitting a first light beam (13) at a first wavelength in the predetermined zone, said first optical system having a first optical axis (12),
   • the optical receiving module (30) comprising a second optical system and at least one first photoreceptor (31), said second optical system:

      ■ having a second optical axis (32),
      ■ at least comprising means for optically mixing (33) a portion of the first emitting beam originating from the reference channel and a second light beam (34) corresponding to a portion of the light of the first beam diffused by the predetermined zone, said second beam being emitted at at least one second wavelength,
      ■ forming the image of the first and second beams mixed on said photoreceptor (31),
      ■ the calculation means being arranged so as to at least determine the difference in wavelength or frequency between the first wavelength and the second wavelength,

   **characterised in that** the angle formed between the first and the second optical axes (12, 32) is different to zero and is of the order of several degrees.

**2.** The optical device according to claim 1, **characterised in that** the optical means of the reference channel comprise an optical fibre (20) and optical elements (21) arranged so as to inject a portion of the first light beam into said fibre.

**3.** The optical device according to claim 1 or 2, **characterised in that** the optical means of the reference channel comprise a device, of the acousto-optic cell type, allowing a slight shift of the wavelength of the reference beam.

**4.** The optical device according to any one of the previous claims, **characterised in that** the second optical system at least comprises means for optically mixing (33) a portion of the first emitting beam originating from the reference channel and of a third light beam corresponding to a portion of the light from the first beam diffused by the predetermined zone, said third beam being emitted at least at a second wavelength, said third beam corresponding to a second portion of the diffused beam.

**5.** The optical device according to claim 5, **characterised in that** the optical receiving module comprises a second photoreceptor (35), said second optical system forming the image of the first and third beams mixed on said second photoreceptor.

**6.** The optical device according to claim 5 or 6, **characterised in that** an optical phase plate (332) is arranged on the path of the third beam upstream of the optical mixing means.

**7.** The optical device according to any one of the previous claims, **characterised in that** the optical mixing means is a plate (330) with flat and parallel surfaces inclined on the optical axes of at least the first light beam and at least the second light beam, the first light beam being transmitted by said plate after two successive reflections, the second light beam being directly transmitted by said plate.

**8.** The optical device according to any one of claims 1 to 7, **characterised in that** the optical mixing means is a diffraction array (331), with at least one of the beams being diffracted by said array.

**9.** The optical device according to any one of claims 1 to 7, **characterised in that** the optical mixing means comprises a Nomarski prism (335).

**10.** The device according to any one of claims 4 to 7, **characterised in that** the optical means comprises a phase plate (333) arranged so as to deflect the first, second and third beams in three different directions thus creating three triplets of three beams, each triplet of deflected beams having a phase deviation relative to the other two.

**11.** The optical device according to claim 10, **characterised in that** the phase plate comprises a wave-like structure (334) comprising identical elements, each element comprising at least three flat, inclined facets.

**12.** The optical device according to any of the previous claims, **characterised in that** the calculation means comprise means for calculating the Fourier transform of the signals originating from the photoreceptors and means for analysing said Fourier transforms so as to determine any frequency peaks, the anemometric parameters being determined from an analysis of the position of said peaks.

**13.** The optical device according to claim 12, **characterised in that**, as the optical receiving module comprises two receivers, the calculation means perform the Fourier transformation of a complex pseudo-signal wherein the real portion is the first signal originating from the first photoreceptor and the imaginary portion is the second signal originating from the second photoreceptor.

**14.** An aircraft, **characterised in that** it comprises at least one optical device designed for measuring anemometric parameters according to one of the previous claims, the measuring zone being located near and outside the boundary layer of the aircraft.

**15.** The aircraft according to claim 14, **characterised in that** the device is of the parietal type, that is, all of the elements of the device are arranged inside the device, only the first light beam being emitted towards the outside of the aircraft.

**16.** The aircraft according to claim 15, **characterised in that** the device further comprises a reflecting optical element (R) disposed on the skin of the aircraft and arranged so as to reflect a portion of the light of the first beam diffused by the predetermined zone on the optical axis of the second optical system thus forming the second beam.

**17.** The aircraft according to one of claims 14 to 16, **characterised in that** the aircraft comprises a mechanical element arranged so as to create acoustic turbulences near the measuring zone.

**Patentansprüche**

**1.** Optische Vorrichtung für Luftfahrzeuge zum Messen der anemometrischen Parameter eines in Bewegung befindlichen Gases, wie z.B. dessen Geschwindigkeit und Temperatur, wobei das Gas eine vorbestimmte Messzone (50) einnimmt, wobei die Vorrichtung ein optisches Emissionsmodul (10), ein optisches Empfangsmodul (30), optische Mittel (20) zum Bilden eines Referenzkanals und mit dem Empfangsmodul verbundene Rechenmittel umfasst,

• wobei das optische Emissionsmodul (10) ein erstes optisches System umfasst, das einen ersten Lichtstrahl (13) mit einer ersten Wellenlänge in der vorbestimmten Zone emittiert, wobei das erste optische System eine erste optische Achse (12) hat,
• wobei das optische Empfangsmodul (30) ein zweites optisches System und wenigstens einen ersten Fotorezeptor (31) umfasst, wobei das zweite optische System:

■ eine zweite optische Achse (32) hat,
■ wenigstens Mittel (33) zum optischen Mischen eines Teils des vom Referenzkanal ausgehenden ersten Emissionsstrahls und eines zweiten Lichtstrahls (34) umfasst, der einem Teil des von der vorbestimmten Zone gestreuten ersten Lichtstrahls entspricht, wobei der zweite Strahl mit wenigstens einer zweiten Wellenlänge emittiert wird,
■ das Bild des ersten und zweiten Strahls auf dem Fotorezeptor (31) gemischt bildet,
■ wobei die Rechenmittel so ausgelegt sind, dass sie wenigstens die Wellenlängen- oder Frequenzdifferenz zwischen der ersten Wellenlänge und der zweiten Wellenlänge bestimmen,

**dadurch gekennzeichnet, dass** der Winkel, den die erste und die zweite optische Achse (12, 32) zwischen sich bilden, ungleich null ist und in der Größenordnung von mehreren Grade liegt.

**2.** Optische Vorrichtung nach Anspruch 1, **dadurch gekennzeichnet, dass** die optischen Mittel des Referenzkanals optische Faser (20) und optische Elemente (21) zum Injizieren eines Teils des ersten Lichtstrahls in die Faser umfasst.

**3.** Optische Vorrichtung nach Anspruch 1 oder 2, **dadurch gekennzeichnet, dass** die optischen Mittel des Referenzkanals eine Vorrichtung des akustooptischen Zellentyps umfasst, die eine geringfügige Verschiebung der Wellenlänge des Referenzstrahls zulässt.

**4.** Optische Vorrichtung nach einem der vorherigen Ansprüche, **dadurch gekennzeichnet, dass** das zweite optische System wenigstens Mittel (33) zum optischen Mischen eines Teils des vom Referenzkanal kommenden ersten Emissionsstrahls und eines dritten Lichtstrahls umfasst, der einem Teil des Lichts von dem ersten Strahl entspricht, gestreut durch die vorbestimmte Zone, wobei der dritte Strahl mit wenigstens einer zweiten Wellenlänge emittiert wird, wobei der dritte Strahl einem zweiten Teil des gestreuten Strahls entspricht.

**5.** Optische Vorrichtung nach Anspruch 5, **dadurch gekennzeichnet, dass** das optische Empfangsmodul einen zweiten Fotorezeptor (35) umfasst, wobei das zweite optische System das Bild der auf dem zweiten Fotorezeptor gemischten ersten und dritten Strahlen bildet.

**6.** Optische Vorrichtung nach Anspruch 5 oder 6, **dadurch gekennzeichnet, dass** eine optische Phasenplatte (332) auf der Bahn des dritten Strahls oberhalb des optischen Mischmittels angeordnet ist.

**7.** Optische Vorrichtung nach einem der vorherigen Ansprüche, **dadurch gekennzeichnet, dass** das optische Mischmittel eine Platte (330) mit flachen und parallelen Flächen ist, die auf den optischen Achsen von wenigstens dem ersten Lichtstrahl und wenigstens dem zweiten Lichtstrahl geneigt sind, wobei der erste Lichtstrahl nach zwei aufeinander folgenden Reflexionen von der Platte übertragen wird, wobei der zweite Lichtstrahl direkt von der Platte übertragen wird.

**8.** Optische Vorrichtung nach einem der Ansprüche 1 bis 7, **dadurch gekennzeichnet, dass** das optische Mischmittel ein Beugungsgitter (331) ist, wobei wenigstens einer der Strahlen von dem Gitter gebeugt wird.

9. Optische Vorrichtung nach einem der Ansprüche 1 bis 7, **dadurch gekennzeichnet, dass** das optische Mischmittel ein Nomarski-Prisma (335) umfasst.

10. Optische Vorrichtung nach einem der Ansprüche 4 bis 7, **dadurch gekennzeichnet, dass** das optische Mischmittel eine Phasenplatte (333) umfasst, die so angeordnet ist, dass sie den ersten, zweiten und dritten Strahl in drei verschiedenen Richtungen ablenkt und so drei Triplets von drei Strahlen erzeugt, wobei jedes Triplett von abgelenkten Strahlen eine Phasenabweichung relativ zu den beiden anderen hat.

11. Optische Vorrichtung nach Anspruch 10, **dadurch gekennzeichnet, dass** die Phasenplatte eine periodische Struktur (334) mit identischen Elementen hat, wobei jedes Element wenigstens drei ebene, geneigte Facetten umfasst.

12. Optische Vorrichtung nach einem der vorherigen Ansprüche, **dadurch gekennzeichnet, dass** die Rechenmittel Mittel zum Berechnen der Fourier-Transformierten von den von den Fotorezeptoren kommenden Signalen und Mittel zum Analysieren der Fourier-Transformierten umfassen, um die Frequenzspitze(n) zu ermitteln, wobei die anemometrischen Parameter anhand einer Analyse der Position der Spitzen ermittelt werden.

13. Optische Vorrichtung nach Anspruch 12, **dadurch gekennzeichnet, dass** die Rechenmittel, wenn das optische Empfangsmodul zwei Empfänger umfasst, die FourierTransformation eines komplexen Pseudo-Signals ausführen, wobei der reale Teil das vom ersten Fotorezeptor kommende erste Signal ist und der imaginäre Teil das vom zweiten Fotorezeptor kommende zweite Signal ist.

14. Luftfahrzeug, **dadurch gekennzeichnet, dass** es wenigstens eine optische Vorrichtung zum Messen von anemometrischen Parametern nach einem der vorherigen Ansprüche umfasst, wobei sich die Messzone in der Nähe und außerhalb der Begrenzungsschicht des Luftfahrzeugs befindet.

15. Luftfahrzeug nach Anspruch 14, **dadurch gekennzeichnet, dass** die Vorrichtung vom parietalen Typ ist, das heißt alle Elemente der Vorrichtung befinden sich innerhalb der Vorrichtung, wobei nur der erste Lichtstrahl zur Außenseite des Luftfahrzeugs hin emittiert wird.

16. Luftfahrzeug nach Anspruch 15, **dadurch gekennzeichnet, dass** die Vorrichtung ferner ein reflektierendes optisches Element (R) umfasst, das auf der Haut des Luftfahrzeugs angeordnet und so ausgelegt ist, dass es einen Teil des Lichts des von der vorbestimmten Zone gestreuten Strahls auf der optischen Achse des zweiten optischen Systems reflektiert und so den zweiten Strahl bildet.

17. Luftfahrzeug nach einem der Ansprüche 14 bis 16, **dadurch gekennzeichnet, dass** das Luftfahrzeug ein mechanisches Element umfasst, das so gestaltet ist, dass es akustische Turbulenzen in der Nähe der Messzone erzeugt.

# FIG. 1

# FIG. 2

# FIG. 3

# FIG. 4

# FIG.5

# FIG. 6

# FIG. 7

# FIG. 8

FIG. 9

FIG. 10

# FIG. 11

# FIG. 12

## FIG. 13

## FIG. 14

# FIG. 15

# FIG. 16

# FIG. 17

# FIG. 18

FIG. 19